# EUROPÄISCHE PATENTSCHRIFT

(11) **EP 3 663 028 B1**
(45) Veröffentlichungstag und Bekanntmachung des Hinweises auf die Patenterteilung: **08.02.2023**
(21) Anmeldenummer: 19211680.4
(22) Anmeldetag: 27.11.2019
(51) Int. Cl.: B23F 23/00

(54) **SCHLEIFWERKZEUGMASCHINE ZUM SCHLEIFEN VON ZAHNRÄDERN**
GRINDING MACHINE FOR GRINDING OF GEARS
MACHINE-OUTIL DE PONÇAGE DESTINÉE À PONCER DES ROUES DENTÉES

(30) Priorität: 06.12.2018 EP 18210718
(43) Veröffentlichungstag der Anmeldung: 10.06.2020
(73) Patentinhaber: Burri Werkzeugmaschinen GmbH & Co. KG, 78667 Villingendorf (DE)
(72) Erfinder: Burri, Dieter, 78662 Bösingen (DE)
(74) Vertreter: Witte, Weller & Partner Patentanwälte mbB

(56) Entgegenhaltungen:
- EP-A2- 0 250 775
- DE-A1- 3 532 116
- DE-C1- 4 434 059
- US-A- 1 967 163
- US-A- 3 443 341
- US-A1- 2009 004 954

## Beschreibung

Die Erfindung betrifft eine Schleifwerkzeugmaschine zum kontinuierlichen oder diskontinuierlichen Schleifen eines Zahnrads mit den Merkmalen des Oberbegriffs des Anspruchs 1. Mit Zahnrad ist hier ein Stirnrad gemeint, wobei ein Schleifen anderer Zahnräder oder einer Schnecke nicht ausgeschlossen ist. Geschliffen werden Zahnflanken von Zähnen des Zahnrads.

Schleifwerkzeugmaschinen zum Schleifen eines Zahnrads weisen eine werkstücktragende Spindel und eine werkzeugtragende Arbeitsspindel auf, die tangential oder in einem spitzen Winkel zu einer Tangente in einer Tangentialebene zur werkstücktragenden Spindel angeordnet ist. Vorzugsweise ist der spitze Winkel der Arbeitsspindel zur Tangente zur werkstücktragenden Spindel einstellbar zur Anpassung an eine Steigung einer Schleifschnecke, so dass ein Schneckengang der Schleifschnecke an einer Eingriffsstelle zwischen zwei Zähnen eines Zahnrads beim Schleifen achsparallel zum Zahnrad ausrichtbar ist. Zum Schleifen eines schrägverzahnten Zahnrads ist die Arbeitsspindel in Richtung einer Schrägstellung der Zähne des Zahnrads ausrichtbar.

"Werkstücktragend" und "werkzeugtragend" bedeutet, dass ein Werkstück, beim Schleifen eines Zahnrads also das Zahnrad, und ein Werkzeug, beispielsweise eine Schleifschnecke, auf der jeweiligen Spindel anordenbar ist. Das Werkzeug ist drehfest auf der Arbeitsspindel anordenbar und das Werkstück, also das Zahnrad, ist drehbar auf der werkstücktragenden Spindel anordenbar. Zur Unterscheidung von der werkzeugtragenden Arbeitsspindel wird die werkstücktragende Spindel hier auch als zweite Spindel bezeichnet.

Die Schleifwerkzeugmaschine weist eine normalerweise mehrachsige Führung oder Führungen auf, mit denen die werkstücktragende Spindel und die werkzeugtragende Arbeitsspindel relativ zueinander so beweglich sind, dass Zahnflanken des Zahnrads geschliffen werden können.

Beim kontinuierlichen Schleifen wird eine Schleifschnecke, die auf der Arbeitsspindel angeordnet ist, drehend um ihre Achse angetrieben und ein Schneckengang der Schleifschnecke greift zwischen zwei Zähne eines Zahnrads, das auf der werkstücktragenden zweiten Spindel angeordnet ist. Flanken des Schneckengangs der Schleifschnecke liegen an einander zugewandten Zahnflanken zweier benachbarter Zähne und/oder an Zahnflanken eines Zahns des Zahnrads an, so dass durch die Drehung der Schleifschnecke die Zahnflanken geschliffen werden. Das Zahnrad dreht sich synchron mit einer Schraubbewegung des Schneckengangs durch die Drehung der Schleifschnecke mit,. Die Anordnung der Schleifschnecke auf der Arbeitsspindel und des Zahnrads auf der zweiten Spindel entspricht oder erinnert jedenfalls an ein Schneckengetriebe.

Bei bekannten Schleifwerkzeugmaschinen ist die werkzeugtragende Arbeitsspindel üblicherweise zugleich auch eine Motorwelle eines Elektromotors zum Drehantrieb der Arbeitsspindel oder es ist die Arbeitsspindel eine Motorwelle axial verlängernd starr mit der Motorwelle verbunden. Die Arbeitsspindel bzw. die Motorwelle ist mit einem mehr oder weniger großen axialen Abstand vom Schleifwerkzeug auf einer Seite des Schleifwerkzeugs in einem Motorgehäuse drehbar gelagert. Schleifkräfte, die beim Schleifen der Zahnflanken eines Zahnrads radial und tangential auf die Arbeitsspindel einwirken, beanspruchen die Arbeitsspindel stark auf Biegung.

Die Patentanmeldung US 2009/0 004 954 A1 offenbart eine Schleifwerkzeugmaschine gemäß dem Oberbegriff des Anspruchs 1 mit einer beidseitig festgelegten, drehfesten Welle, auf der eine Hohlwelle eines Hohlwellenmotors drehbar gelagert ist, auf der ein rohrförmiger Werkzeugträger mit Flanschen an beiden Enden drehfest angeordnet ist.

Das chinesische Gebrauchsmuster CN 203 936 773 U offenbart einen Hohlschaft mit einem abgewinkelten Schleifkopf. Auf einem abgewinkelten Ende des Hohlschafts ist ein rohrförmiger Schleifscheibenträger drehbar gelagert. Im Hohlschaft ist eine flexible Welle angeordnet, die an einem dem Schleifkopf fernen Ende aus dem Hohlschaft vorsteht und dort drehend antreibbar ist. Am abgewinkelten Ende überträgt eine Kappe eine Drehung der flexiblen Welle auf den Schleifscheibenträger.

In der europäischen Patentanmeldung EP 0 250 775 A2 wird ein Winkelversatz jedes neu aufgespannten Zahnrads zu einem nur einmal vorher aufgespannten Referenzzahnrad gemessen und der Versatz vor einem Schleifen der Zahnflanken korrigiert.

Die Offenlegungsschrift DE 10 2012 018 358 A1 offenbart eine Werkzeuganordnung mit einer Schleifscheibe, die auf einer Hohlspindel angeordnet ist, die mit einem Lager innerhalb und mit einem zweiten Lager außerhalb der Schleifscheibe drehbar auf einem Achsstummel gelagert ist. Ein Drehantrieb erfolgt beispielsweise durch einen integrierten Motor oder mit einem Riemen.

Die Offenlegungsschrift DE 10 2005 030 277 A1 offenbart eine Spindelvorrichtung mit einem Elektromotor, dessen Rotor mit Kugellagern auf beiden Seiten des Rotors drehbar in einem Gehäuse gelagert ist. Des Weiteren weist die Spindelvorrichtung eine Werkzeugspannvorrichtung auf, die mit zwei eigenen Kugellagern seitlich neben dem Elektromotor drehbar in dem Gehäuse gelagert ist.

Aufgabe der Erfindung ist eine Schleifwerkzeugmaschine zum Schleifen eines Zahnrads mit einer kompakten Arbeitsspindeleinheit.

Gelöst wird diese Aufgabe durch die Merkmale des Anspruchs 1. Die Unteransprüche haben vorteilhafte Ausgestaltungen und Weiterbildungen der Erfindung zum Gegenstand.

Die erfindungsgemäße Schleifwerkzeugmaschine weist eine drehend antreibbare, werkzeugtragende Arbeitsspindel und eine werkstücktragende Spindel auf, die zur Unterscheidung von der Arbeitsspindel hier auch als zweite Spindel bezeichnet wird. Erfindungsgemäß ist die Arbeitsspindel als Hohlspindel ausgeführt und in ihrem Inneren drehbar an einem Lagerhalter gelagert, der in die hohle Arbeitsspindel ragt. Und zwar ist die als Hohlspindel ausgebildete Arbeitsspindel innerhalb eines Werkzeugaufnahmebereichs drehbar an dem Lagerhalter gelagert. Der Werkzeugaufnahmebereich ist ein axialer Bereich, in dem sich ein Schleifwerkzeug befindet, wenn es in vorgesehener Weise drehfest auf der Arbeitsspindel angeordnet ist. Dabei ist von einem axial längst möglichen Werkzeugaufnahmebereich der jeweiligen Arbeitsspindel auszugehen, auch wenn ein jeweils benutztes Schleifwerkzeug axial kürzer ist.

Die Hohlspindel ist insbesondere rohrförmig, sie kann zylinderrohrförmig sein, innen und/oder außen zylindrische Abschnitte und Durchmesserstufen aufweisen. Die Arbeitsspindel kann innen und/oder außen auch nicht zylindrische sondern beispielsweise konische Abschnitte aufweisen. Auch eine nicht kreisrunde, sondern beispielsweise innen und/oder außen eckige oder eckige Abschnitte aufweisende Arbeitsspindel ist möglich. Die Aufzählung dient einer Veranschaulichung verschiedener Ausführungsmöglichkeiten der als Hohlspindel ausgebildeten Arbeitsspindel der erfindungsgemäßen Schleifwerkzeugmaschine und ist nicht abschließend, andere Ausführungen der Hohlspindel sind möglich.

Der Lagerhalter ist insbesondere stabförmig, wobei er ebenfalls hohl, beispielsweise rohrförmig sein kann. Er ist an einen Innenraum der Arbeitsspindel so angepasst, dass er von einer Stirnseite in die Arbeitsspindel hinein ragen und das oder die Lager tragen bzw. aufweisen kann.

Dadurch dass die Arbeitsspindel innerhalb des Werkzeugaufnahmebereichs drehbar gelagert ist, stützt die Lagerung die Arbeitsspindel mit kurzem Abstand in axialer Richtung von der Schleifstelle bzw. den Schleifstellen des Schleifwerkzeugs an den Zahnflanken des Zahnrads ab, wo die Schleifkräfte wirken. Die Abstützung der Arbeitsspindel gegen Biegung durch die Schleifkräfte ist verbessert, wodurch eine mechanische Beanspruchung der Drehlagerung und der Arbeitsspindel verringert und eine Präzision verbessert sind.

Außerdem ermöglicht die Erfindung eine axial kurz bauende Arbeitsspindel, weil sich die Lagerungen innerhalb des Werkzeugaufnahmebereichs befinden und die Arbeitsspindel nicht um eine axiale Dicke der Lagerungen verlängern.

Um Zahnflanken eines Zahnrads als Werkstück mit hoher Präzision schleifen zu können weist die erfindungsgemäße Schleifwerkzeugmaschine eine elektronische Synchronisation einer Drehwinkelstellung der Arbeitsspindel und einer Drehwinkelstellung der werkstücktragenden Spindel auf, die ein maßgenaues Schleifen der Zahnflanken des Zahnrads ermöglicht. Die Synchronisation regelt eine Drehung der Arbeitsspindel und eine Drehung der werkstücktragenden Spindel so, dass die Zahnflanken des Zahnrads maßgenau geschliffen werden.

Ein Antriebsmotor zu einem Drehantrieb der Arbeitsspindel, insbesondere ein Elektromotor, ist auf einer Seite des Werkzeugaufnahmebereichs außerhalb des Werkzeugaufnahmebereichs der Arbeitsspindel angeordnet. Ein Rotor des Antriebsmotors ist starr mit der Arbeitsspindel verbunden und weist keine eigene Drehlagerung auf, sondern ist mit der Drehlagerung der als Hohlspindel ausgebildeten Arbeitsspindel innerhalb des Werkzeugaufnahmebereichs drehbar gelagert um eine Überbestimmung der Drehlagerung des Rotors des Antriebsmotors und der Arbeitsspindel zu vermeiden. Die Arbeitsspindel oder ein Teil der Arbeitsspindel kann zugleich die Motorwelle sein. Um Schwingungen des im Werkzeugaufnahmebereich der Arbeitsspindel drehbar gelagerten Rotors des Antriebsmotors bei seiner Drehung zu vermeiden, sind der Rotor, eine etwaige Motorwelle und die Arbeitsspindel starr ausgebildet.

Für die Synchronisation der Drehwinkelstellungen der Arbeitsspindel und der werkstücktragenden Spindel beziehungsweise zur Regelung der synchronen, aufeinander abgestimmten Drehungen der Arbeitsspindel und der werkstücktragenden Spindel sieht eine Ausgestaltung der Erfindung einen Drehwinkelsensor am Rotor des Antriebsmotors vor. Um die Drehung der Arbeitsspindel exakt zur Drehung der werkstücktragenden Spindel synchronisieren zu können, sind der Rotor, eine etwaige Motorwelle und die Arbeitsspindel starr ausgebildet.

Erfindungsgemäß ist der Antriebsmotor vorzugsweise axial kürzer als der Werkzeugaufnahmebereich der Arbeitsspindel und/oder die Arbeitsspindel und der Antriebsmotor sind axial nicht länger als doppelt so lang wie der Werkzeugaufnahmebereich der Arbeitsspindel. Dadurch erreicht die Erfindung eine kurzbauende, kompakte Einheit der Arbeitsspindel mit ihrem Antriebsmotor.

Vorzugsweise ist die Arbeitsspindel an oder nahe an Enden des Werkzeugaufnahmebereichs drehbar an dem Lagerhalter gelagert. Eine Weiterbildung oder eine andere Ausgestaltung der Erfindung sieht eine drehbare Lagerung der Arbeitsspindel in ihrem Inneren axial beiderseits der Schleifstelle oder Schleifstellen des Schleifwerkzeugs mit den Zahnflanken der Zähne des Zahnrads. Dadurch wird eine stabile Abstützung der Arbeitsspindel durch die Drehlagerung erreicht.

Eine bevorzugte Ausgestaltung der Erfindung sieht vor, dass die Arbeitsspindel einen rohrförmigen äußeren Spindelteil und einen inneren Spindelteil aufweist, der ebenfalls rohrförmig oder in sonstiger Weise hohl oder der massiv sein kann und der koaxial innerhalb des rohrförmigen äußeren Spindelteils angeordnet ist. Der äußere und der innere Spindelteil können einstückig miteinander sein oder die Arbeitsspindel besteht aus mehreren, starr verbundenen Teilen. Zwischen dem inneren und dem äußeren Spindelteil besteht ein Ringraum, in den der Lagerhalter ragt, der bei dieser Ausgestaltung der Erfindung rohrförmig oder in anderer Weise hohl ist, weil er den inneren Spindelteil der Arbeitsspindel umschließt. Es kann der innere Spindelteil in und/oder der äußere Spindelteil in seinem Inneren auf dem rohrförmigen Lagerhalter drehbar gelagert sein.

Auch wenn der innere Spindelteil der Arbeitsspindel massiv ist, wird die Arbeitsspindel auch bei dieser Ausführung der Erfindung aufgrund ihres rohrförmigen äu-ßeren Spindelteils als Hohlspindel bezeichnet.

Der Lagerhalter ist am Antriebsmotor befestigt.

Eine Weiterbildung der vorstehend erläuterten Ausführungsform der Erfindung sieht vor, dass der rohrförmige Lagerhalter von einer Stirnseite der Arbeitsspindel in den Ringraum zwischen dem inneren Spindelteil und dem äußeren Spindelteil ragt und/oder dass der innere Spindelteil und der äußere Spindelteil der Arbeitsspindel axial außerhalb eines Endes des Lagerhalters starr miteinander verbunden sind, wozu wie geschrieben der innere Spindelteil und der äußere Spindelteil einstückig miteinander oder verschiedene und miteinander verbundene Teile sein können.

Der Rotor des Antriebsmotors ist bei dieser Ausführungsform der Erfindung vorzugsweise starr mit dem inneren Spindelteil der Arbeitsspindel verbunden. Der innere Spindelteil der Arbeitsspindel kann zugleich die Motorwelle oder Teil der Motorwelle sein.

Der Lagerhalter ist auf der Stirnseite der Arbeitsspindel, von der aus er in die Arbeitsspindel ragt, befestigt, beispielsweise an einem Motorgehäuse eines Antriebsmotors der Arbeitsspindel, einem Maschinengestell oder Maschinenbett oder einer Führung der Arbeitsspindel.

Eine bevorzugte Ausgestaltung der Erfindung sieht eine automatische Wuchteinrichtung vor, die die Arbeitsspindel mit dem auf ihr drehfest angeordneten Werkzeug automatisch auswuchtet. Insbesondere wuchtet die Wuchteinrichtung die Arbeitsspindel mit dem auf ihr drehfest angeordneten Werkzeug bei einem Drehantrieb auf automatisch und dynamisch aus.

Eine Ausgestaltung der Erfindung sieht eine werkstücktragende zweite Spindel und eine oder mehrere Führungen vor, mit der die beiden Spindeln relativ zueinander beweglich sind, so dass die Zahnflanken der Zähne eines Zahnrads geschliffen werden können. "Werkstücktragend" bedeutet, dass ein Zahnrad auf der zweiten Spindel anordenbar ist. Die Führungen können beispielsweise Schiebeführungen und/oder Schwenklagerungen sein.

Sämtliche in der Beschreibung genannte und/oder der Zeichnung dargestellte Merkmale können einzeln für sich oder in jeder beliebigen Kombination bei Ausführungen der Erfindung verwirklicht sein. Ausführungen der Erfindung, die nicht alle, sondern nur einen Teil der Merkmale eines Anspruchs, auch des unabhängigen Anspruchs, aufweisen, sind möglich.

Die Erfindung wird nachfolgend anhand eines in der Zeichnung dargestellten Ausführungsbeispiels näher erläutert. Es zeigen:
- Figur 1: eine vereinfachte und schematisierte perspektivische Darstellung einer erfindungsgemäßen Schleifwerkzeugmaschine, und
- Figur 2: einen Achsschnitt durch einen Antriebsmotor und eine Arbeitsspindel der Schleifwerkzeugmaschine aus Figur 1.

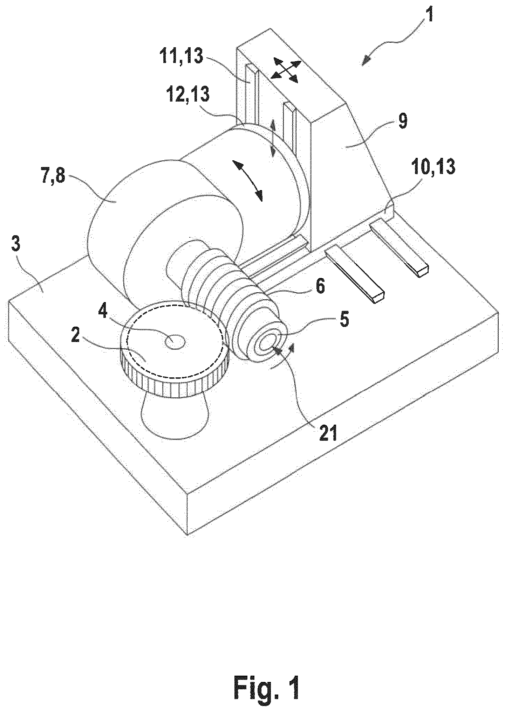

Die in Figur 1 dargestellte, erfindungsgemäße Schleifwerkzeugmaschine 1 ist zum Schleifen eines Zahnrads 2 (Stirnrad) und genauer zum Schleifen von Zahnflanken von Zähnen des Zahnrads 2 vorgesehen. Sie weist ein Maschinenbett 3 auf, das auch als Maschinengestell aufgefasst werden kann. Auf dem Maschinenbett 3 ist eine drehend antreibbare werkstücktragende Spindel 4 mit vertikaler Achse angeordnet, die hier zur Unterscheidung von einer Arbeitsspindel 5 als zweite Spindel 4 bezeichnet wird. "Werkstücktragend" bedeutet, dass das zu schleifende Zahnrad 2 axialfest und drehfest auf der zweiten Spindel 4 anordenbar ist, so dass es zusammen mit der zweiten Spindel 4 drehbar ist. "Vertikal" bezieht sich auf eine vorgesehene Aufstellungsposition der Schleifwerkzeugmaschine 1, wobei für die Erfindung die Richtungen der Achsen der beiden Spindeln 4, 5 im Raum unwesentlich ist, sondern wie bei an sich allen Werkzeugmaschinen es auf eine Lage der beiden Spindeln 4, 5 bzw. des Zahnrads 2 als Werkstück und im Ausführungsbeispiel einer Schleifschnecke 6 als Werkzeug zueinander ankommt.

Die Arbeitsspindel 5 ist mit einem Elektromotor als Antriebsmotor 7 drehend antriebbar, aus dessen Motorgehäuse 8 sie koaxial vorsteht. Die Arbeitsspindel 5 ist zugleich eine Motorwelle des Antriebsmotors 7, sie trägt einen Rotor 24 des Antriebsmotors 7, der im Ausführungsbeispiel ein Elektromotor ist. Die Arbeitsspindel 5 ist werkzeugtragend, d.h. die das Werkzeug bildende Schleifschnecke 6 ist koaxial, axialfest und drehfest auf der Arbeitsspindel 5 anordenbar.

Der Antriebsmotor 7 ist an einem Motorständer 9 angeordnet, der mit einem Kreuzschlitten 10 tangential und radial zur werkstücktragenden zweiten Spindel 4 verschiebbar auf dem Maschinenbett 3 geführt ist. Außerdem ist der Antriebsmotor 7 mit einer hier als Vertikalführung 11 bezeichneten Schiebeführung achsparallel zur zweiten Spindel 4 verschiebbar am Motorständer 9 geführt und mit einer Schwenklagerung 12 um eine zur zweiten Spindel 4 tangentiale und zur Arbeitsspindel 5 radiale Schwenkachse schwenkbar. Der Kreuzschlitten 10 und die Vertikalführung 11 bilden Schiebeführungen und die Schwenklagerung 12 bildet eine Schwenkführung und allgemein Führungen 13, mit denen die Arbeitsspindel 5 in Bezug auf die zweite Spindel 4 beweglich geführt ist.

Die Arbeitsspindel 5 befindet sich in einer Tangentialebene der zweiten Spindel 4, womit eine zu einer Achse der zweiten Spindel 4 parallele Ebene in radialem Abstand von der zweiten Spindel 4 gemeint ist. Mit dem Kreuzschlitten 10 lässt sich wie oben geschrieben der Antriebsmotor 7 und mit ihm die werkzeugtragende Arbeitsspindel 5 tangential und radial zur werkstücktragenden zweiten Spindel 4 verschieben. Mit der Schwenklagerung 12 lässt sich ein Winkel des Antriebsmotors 7 und mit ihm der Arbeitsspindel 5 zu einer Tangente der zweiten Spindel 4 in der Tangentialebene einstellen, wobei die Arbeitsspindel 5 tangential zur zweiten Spindel 4 und stufenlos in beiden Richtungen in einen spitzen Winkel zur Tangente zur zweiten Spindel 4 einstellbar ist. Als Tangente wird hier eine Gerade bezeichnet, die einen radialen Abstand von der werkstücktragenden zweiten Spindel 4 aufweist und sich in einer Radialebene der zweiten Spindel 4 befindet. Das Schwenken des Antriebsmotors 7 und mit ihm der Arbeitsspindel 5 mittels der Schenklagerung 12 dient einer Ausrichtung eines wendelförmigen Schneckengangs der Schleifschnecke 6 zu Zahnflanken von Zähnen des Zahnrads 2, wobei das Zahnrad 2 im Ausführungsbeispiel ein Stirnrad ist, das geradverzahnt oder schrägverzahnt sein kann. Dabei bilden Flanken des Schneckengangs der Schleifschnecke Schleifflächen, die eine Beschichtung mit Schleifkörnern oder dergleichen aufweisen und die beim Schleifen des Zahnrads bzw. genau genommen beim Schleifen der Zahnflanken der Zähne des Zahnrads 2 an den Zahnflanken anliegen.

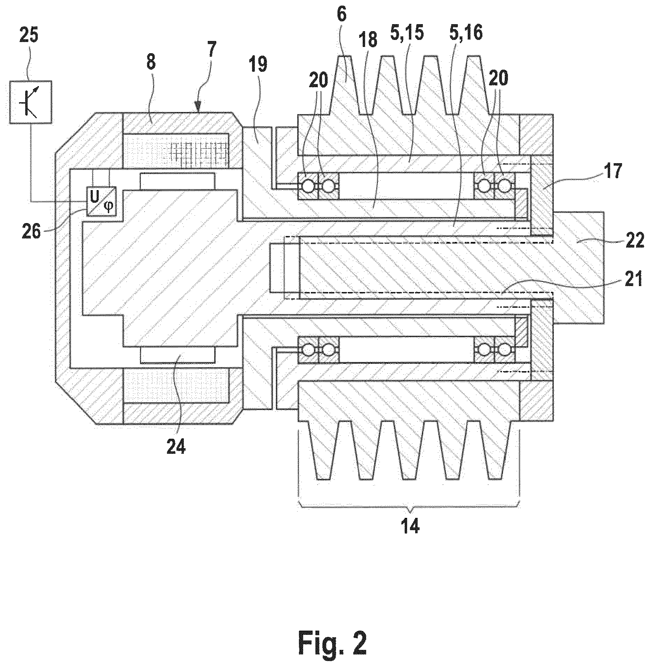

Die Arbeitsspindel 5 und der Antriebsmotor 7 sind im Achsschnitt in Figur 2 zu sehen. Wie oben geschrieben befindet sich ein Teil einer Länge der Arbeitsspindel 5 im Motorgehäuse 8 des den Antriebsmotor 7 bildenden Elektromotors und steht mit einem anderen Teil ihrer Länge auf einer Stirnseite aus dem Motorgehäuse 8 vor. Innerhalb des Motorgehäuses 8 bildet die Arbeitsspindel 5 eine Motorwelle, auf der der Rotor 24 des als Elektromotor ausgebildeten Antriebsmotors 7 drehfest angeordnet ist.

Die das Werkzeug bildende Schleifschnecke 6 ist drehfest auf dem außerhalb des Motorgehäuses 8 befindlichen Teil der Arbeitsspindel 5 angeordnet, wobei ein axialer Bereich der Arbeitsspindel 5, auf dem sich die Schleifschnecke 6 befindet, als Werkzeugaufnahmebereich 14 bezeichnet wird. Weil auch axial kürzere Werkzeuge auf der Arbeitsspindel 5 anordenbar sind, bildet den Werkzeugaufnahmebereich 14 der axiale Abschnitt der Arbeitsspindel 5, der maximal für ein Werkzeug zur Verfügung steht oder anders ausgedrückt der axiale Abschnitt der Arbeitsspindel 5, der eine axiale Länge des Werkzeugs begrenzt.

Erfindungsgemäß ist die Arbeitsspindel 5 als Hohlspindel ausgeführt, sie weist ein rohrförmiges äußeres Spindelteil 15 auf, das ein inneres Spindelteil 16 koaxial umschließt. Im Ausführungsbeispiel ist das äußere Spindelteil 15 zylinderrohrförmig und das innere Spindelteil 16 ebenfalls zylinderrohrförmig, wobei das innere Spindelteil 16 grundsätzlich auch massiv sein kann. Das innere Spindelteil 16 ist axial länger als das äußere Spindelteil 15 und steht in einer Richtung axial aus dem äu-ßeren Spindelteil 15 vor. Der vorstehende Teil des inneren Spindelteils 16 ragt in das Motorgehäuse 8 und bildet dort die Motorwelle. An einem dem Antriebsmotor 7 und dem Motorgehäuse 8 fernen Stirnende sind der innere Spindelteil 16 und der äußere Spindelteil 15 durch einen im Ausführungsbeispiel lochscheibenförmigen Flansch 17 starr mit einander verbunden.

Aus Richtung des Antriebsmotors 7 ragt ein - im Ausführungsbeispiel zylinderrohrförmiger - Lagerhalter 18 in einen Ringspalt zwischen dem inneren Spindelteil 16 und dem äußeren Spindelteil 15 der Arbeitsspindel 5. Der Lagerhalter 18 ist starr am Antriebsmotor 7 angeordnet, im Ausführungsbeispiel weist er einen Flansch 19 auf, der mit dem Motorgehäuse 8 verschraubt ist.

Die als Hohlspindel ausgebildete Arbeitsspindel 5 ist an dem Lagerhalter 18 drehbar gelagert. Im Ausführungsbeispiel ist der äußere Spindelteil 15 mit Kugellagern 20 drehbar auf dem Lagerhalter 18 wälzgelagert, es kann allerdings auch der innere Spindelteil 16 im Lagerhalter 18 drehbar gelagert sein und die Lagerung der Arbeitsspindel 5 am Lagerhalter 18 kann Gleitlager, auch hydrostatische Gleitlager, anstatt Wälzlagern oder Gleitlager und Wälzlager aufweisen (nicht dargestellt). Die Arbeitsspindel 5 ist innerhalb des Werkzeugaufnahmebereichs 14 drehbar am Lagerhalter 18 gelagert, was eine axial kurzbauende Arbeitsspindel 5 ermöglicht und wodurch die Arbeitsspindel 5 gut gegen beim Schleifen des Zahnrads 2 auf die Schleifschnecke 6 einwirkende Schleifkräfte abgestützt ist. Die Arbeitsspindel 5 ist an oder nahe an den axialen Enden des Werkzeugaufnahmebereichs 14 und in axialer Richtung der Arbeitsspindel 5 gesehen beiderseits einer Schleifstelle, an der der Schneckengang der Schleifschnecke 6 an den Zahnflanken der Zähne des Zahnrads 2 anliegt, drehbar gelagert.

Im Inneren Spindelteil 16 ist eine automatische Wuchteinrichtung 22 angeordnet, die bei einem Drehanlauf der Arbeitsspindel 5 eine Unwucht der Arbeitsspindel 5 einschließlich der drehfest auf ihr angeordneten Schleifschnecke 6 und des Rotors 24 des Antriebsmotors 7 dynamisch misst und durch Verschiebung von nicht dargestellten Wuchtgewichten in der Wuchteinrichtung 22 dynamisch auswuchtet. Der den Antriebsmotor 7 bildende Elektromotor weist keine eigene Drehlagerung seines Rotors 24 auf, sondern er ist außerhalb des Motorgehäuses 8 und innerhalb des Werkzeugaufnahmebereichs 14 mit der Drehlagerung der Arbeitsspindel 5 drehbar am Lagerhalter 18 gelagert. Um Schwingungen bei einem Drehantrieb zu vermeiden, sind der Rotor 24 und die Arbeitsspindel 5, die auch die Motorwelle bildet, starr ausgeführt. Auch die Verbindung des inneren Spindelteils 15 und des äußeren Spindelteils 16 der Arbeitsspindel 5 mit dem Flansch 17 ist starr.

Der den Antriebsmotor 7 bildende Elektromotor ist axial kürzer als der Werkzeugaufnahmebereich 14 der Arbeitsspindel 5 und die Arbeitsspindel 5 und der Antriebsmotor 7 sind zusammen axial nicht länger als doppelt so lang wie der Werkzeugaufnahme Bereich 14 der Arbeitsspindel 5. Dadurch ergibt sich eine axial kurze und kompakte Arbeitsspindeleinheit mit der Arbeitsspindel 5 und ihrem Antriebsmotor 7.

Zur Synchronisation der Drehungen der Arbeitsspindel 5 und der werkstücktragenden Spindel 4 weist die erfindungsgemäße Schleifwerkzeugmaschine 1 eine elektronische Synchronisation 25 und einen Drehwinkelsensor 26 im Motorgehäuse 8 des Antriebsmotors 7 am Rotor 24 und einen weiteren, nicht dargestellten Drehwinkelsensor an der werkstücktragenden Spindel 4 auf. Der Drehwinkelsensor 26 des Antriebsmotors 7 befindet sich im Ausführungsbeispiel auf einer der Arbeitsspindel 5 fernen Seite des Rotors 24. Die Motorwelle und Arbeitsspindel 5 sind starr, um einen Winkelfehler zwischen dem Rotor 24, an dem die Drehwinkelstellung mit dem Drehwinkelsensor 26 gemessen wird, und der Schleifschnecke 6 durch Torsion der Motorwelle und Arbeitsspindel 5 zu vermeiden. Dadurch lassen sich die Drehwinkelstellungen der Arbeitsspindel 5 und damit der Schleifschnecke 6 und der werkstücktragenden Spindel 4 und damit des Zahnrads 2 während der Drehungen der Spindeln 4, 5 exakt synchronisieren, das heißt zueinander ausrichten, was ein maßgenaues Schleifen von Zahnflanken der Zähne des Zahnrads 2 mit hoher Präzision möglich macht.

## Patentansprüche

1. Schleifwerkzeugmaschine zum Schleifen eines Zahnrads, mit einer drehend antreibbaren, werkzeugtragenden Hohlspindel als Arbeitsspindel (5), die in ihrem Inneren und innerhalb eines Werkzeugaufnahmebereichs (14) drehbar an einem Lagerhalter (18) gelagert ist, und mit einem Antriebsmotor (7) zu einem Drehantrieb der Arbeitsspindel (5), **dadurch gekennzeichnet, dass** die Schleifwerkzeugmaschine (1) eine drehend antreibbare, werkstücktragende Spindel (4) und eine elektronische Synchronisation (25) einer Drehwinkelstellung der Arbeitsspindel (5) und einer Drehwinkelstellung der werkstücktragenden Spindel (4) aufweist, dass der Antriebsmotor (7) auf einer Seite des Werkzeugaufnahmebereichs (14) und außerhalb des Werkzeugaufnahmebereichs (14) der Arbeitsspindel (5) angeordnet ist, dass ein Rotor (24) des Antriebsmotors (7) starr mit der Arbeitsspindel (5) verbunden ist und keine eigene Drehlagerung aufweist, und dass der Lagerhalter (18) an dem Antriebsmotor (7) befestigt ist und nur auf einer Seite des Werkzeugaufnahmebereichs (14) befestigt ist und von dieser Seite in die hohle Arbeitsspindel (5) ragt.

2. Schleifwerkzeugmaschine nach Anspruch 1, **dadurch gekennzeichnet, dass** der Rotor (24) des Antriebsmotors (7) einen Drehwinkelsensor (26) für die elektronische Synchronisation (25) der Drehwinkelstellung der Arbeitsspindel (5) und der Drehwinkelstellung der werkstücktragenden Spindel (4) aufweist.

3. Schleifwerkzeugmaschine nach Anspruch 1 oder 2, **dadurch gekennzeichnet, dass** der Antriebsmotor (7) axial kürzer als der Werkzeugaufnahmebereich (14) der Arbeitsspindel (5) und/oder dass die Arbeitsspindel (5) und der Antriebsmotor (7) axial nicht länger als doppelt so lang wie der Werkzeugaufnahmebereich (14) der Arbeitsspindel (5) sind.

4. Schleifwerkzeugmaschine nach einem der vorhergehender Ansprüche, **dadurch gekennzeichnet, dass** die Arbeitsspindel (5) an oder nahe an Enden des Werkzeugaufnahmebereichs (14) drehbar an dem Lagerhalter (18) gelagert ist.

5. Schleifwerkzeugmaschine nach einem der vorhergehender Ansprüche, **dadurch gekennzeichnet, dass** die Arbeitsspindel (5) axial beiderseits einer Schleifstelle oder beiderseits von Schleifstellen eines auf der Arbeitsspindel (5) angeordneten Schleifwerkzeugs mit Zahnflanken eines zu schleifenden Zahnrads (2) drehbar an dem Lagerhalter (18) gelagert ist.

6. Schleifwerkzeugmaschine nach einem der vorhergehenden Ansprüche, **dadurch gekennzeichnet, dass** die Arbeitsspindel (5) ein inneres Spindelteil (16) und ein rohrförmiges äußeres Spindelteil (15) aufweist, das das innere Spindelteil (15) koaxial umschließt, und dass der Lagerhalter (18) rohrförmig ist und in einen Ringraum zwischen dem inneren Spindelteil (16) und dem äußeren Spindelteil (15) der Arbeitsspindel (5) ragt.

7. Schleifwerkzeugmaschine nach Anspruch 6, **dadurch gekennzeichnet, dass** das innere Spindelteil (16) und das äußere Spindelteil (15) der Arbeitsspindel (5) außerhalb des Lagerhalters (18) starr miteinander verbunden sind.

8. Schleifwerkzeugmaschine nach Anspruch 6 oder 7, **dadurch gekennzeichnet, dass** der Rotor (24) des Antriebsmotors (7) der Arbeitsspindel (5) starr mit dem inneren Spindelteil (16) der Arbeitsspindel (5) verbunden ist.

9. Schleifwerkzeugmaschine nach einem der vorhergehender Ansprüche, **dadurch gekennzeichnet, dass** die Arbeitsspindel (5) eine automatische Wuchteinrichtung (22) aufweist.

10. Schleifwerkzeugmaschine nach einem der vorhergehender Ansprüche, **dadurch gekennzeichnet, dass** die Schleifwerkzeugmaschine (1) eine Führung (13) aufweist, mit der die werkstücktragende Spindel (4) und die Arbeitsspindel (5) relativ zueinander beweglich sind.

## Claims

1. Grinding machine for grinding a gear, comprising a rotatably drivable, toolcarrying hollow spindle as a working spindle (5), which is mounted on a bearing holder (18) so as to be rotatable in its interior and within a tool-receiving region (14), and comprising a drive motor (7) for driving the working spindle (5), **characterized in that** the grinding machine (1) has a rotatably drivable workpiece-carrying spindle (4) and an electronic synchronization (25) of a rotational angle position of the working spindle (5) and a rotational angle position of the workpiece-carrying spindle (4), **in that** the drive motor (7) is arranged on one side of the tool-receiving region (14) and outside the tool-receiving region (14) of the working spindle (5) in such a way that a rotor (24) of the drive motor (7) is rigidly connected to the working spindle (5) and does not have its own pivot bearing, and **in that** the bearing holder (18) is fastened to the drive motor (7) and is fastened only at one end of the workpiece-carrying spindle (14), and projects from this end into the hollow working spindle (5).

2. . Grinding machine according to Claim 1, **characterized in that** the rotor (24) of the drive motor (7) has a rotational angle sensor (26) for the electronic synchronization (25) of the rotational angle position of the working spindle (5) and the rotational angle position of the workpiece-carrying spindle (4).

3. . Grinding machine according to either Claim 1 or Claim 2,
**characterized in that** the drive motor (7) is axially shorter than the tool-receiving region (14) of the working spindle (5), and/or **in that** the working spindle (5) and the drive motor (7) are axially no longer than twice as long as the tool-receiving region (14) of the working spindle (5).

4. . Grinding machine according to any one of the preceding claims
**characterized in that** the working spindle (5) is rotatably mounted on the bearing holder (18) at or close to ends of the tool-receiving region (14).

5. . Grinding machine according to any one of the preceding claims
**characterized in that** the working spindle (5) is rotatably mounted on the bearing holder (18) axially on both sides of a grinding point or on both sides of grinding points of a grinding tool arranged on the working spindle (5) with tooth flanks of a gear (2) to be ground.

6. . Grinding machine according to any one of the preceding claims,
**characterized in that** the working spindle (5) has an inner spindle part (16) and a tubular outer spindle part (15) which coaxially surrounds the inner spindle part (15), and **in that** the bearing holder (18) is tubular and projects into an annular space between the inner spindle part (16) and the outer spindle part (15) of the working spindle (5).

7. . Grinding machine according to Claim 6, **characterized in that** the inner spindle part (16) and the outer spindle part (15) of the working spindle (5) are rigidly connected to one another outside the bearing holder (18).

8. . Grinding machine according to either Claim 6 or Claim 7,
**characterized in that** the rotor (24) of the drive motor (7) of the working spindle (5) is rigidly connected to the inner spindle part (16) of the working spindle (5).

9. . Grinding machine according to any one of the preceding claims,
**characterized in that** the working spindle (5) has an automatic balancing device (22).

10. . Grinding machine according to any one of the preceding claims,
**characterized in that** the grinding machine (1) has a guide (13), by means of which the workpiece-bearing spindle (4) and the working spindle (5) are movable relative to one another.

## Revendications

1. Machine-outil de ponçage dévolue à la rectification d'une roue dentée, comprenant une broche creuse porte-outils pouvant être entraînée en rotation et constituant une broche de travail (5) qui est montée tournante sur un support de palier (18), dans son espace interne et à l'intérieur d'une zone (14) de réception d'outils, et un moteur d'entraînement (7) affecté à un entraînement en rotation de ladite broche de travail (5), **caractérisée par le fait que** ladite machine-outil de ponçage (1) est munie d'une broche (4) porte-pièces pouvant être entraînée en rotation, et d'une synchronisation électronique (25) d'une position angulaire de la broche de travail (5) et d'une position angulaire de ladite broche (4) porte-pièces ; **par le fait que** le moteur d'entraînement (7) est disposé d'un côté de la zone (14) de réception d'outils et à l'extérieur de ladite zone (14) de réception d'outils de la broche de travail (5) ; **par le fait qu'**un rotor (24) dudit moteur d'entraînement (7) est relié rigidement à ladite broche de travail (5) et ne comporte aucun montage rotatif propre ; et **par le fait que** le support de palier (18) est fixé audit moteur d'entraînement (7) et est fixé uniquement d'un côté de ladite zone (14) de réception d'outils, côté à partir duquel il fait saillie dans la broche creuse de travail (5).

2. Machine-outil de ponçage selon la revendication 1, **caractérisée par le fait que** le rotor (24) du moteur d'entraînement (7) est doté d'un capteur (26) d'angles de rotation, dédié à la synchronisation électronique (25) de la position angulaire de la broche de travail (5) et de la position angulaire de la broche (4) porte-pièces.

3. Machine-outil de ponçage selon la revendication 1 ou 2, **caractérisée par le fait que** le moteur d'entraînement (7) est plus court, dans le sens axial, que la zone (14) de réception d'outils de la broche de travail (5) ; et/ou **par le fait que** la longueur de ladite broche de travail (5) et dudit moteur d'entraînement (7) n'excède pas, dans le sens axial, le double de la longueur de ladite zone (14) de réception d'outils de ladite broche de travail (5).

4. Machine-outil de ponçage selon l'une des revendications précédentes, **caractérisée par le fait que** la broche de travail (5) est montée à rotation, sur le support de palier (18), au niveau ou à proximité d'extrémités de la zone (14) de réception d'outils.

5. Machine-outil de ponçage selon l'une des revendications précédentes, **caractérisée par le fait que** la broche de travail (5) est montée à rotation dans le sens axial, sur le support de palier (18), de part et d'autre d'une zone de ponçage ou de part et d'autre de zones de ponçage d'un outil de ponçage implanté sur ladite broche de travail (5), associé à des flancs de dents d'une roue dentée (2) à rectifier.

6. Machine-outil de ponçage selon l'une des revendications précédentes, **caractérisée par le fait que** la broche de travail (5) comprend une partie intérieure (16) et une partie extérieure tubulaire (15) qui ceinture coaxialement ladite partie intérieure (16) de la broche ; et **par le fait que** le support de palier (18) est tubulaire, et fait saillie dans un espace annulaire entre ladite partie intérieure (16) et ladite partie extérieure (15) de ladite broche de travail (5).

7. Machine-outil de ponçage selon la revendication 6, **caractérisée par le fait que** la partie intérieure (16) et la partie extérieure (15) de la broche de travail (5) sont reliées rigidement l'une à l'autre à l'extérieur du support de palier (18).

8. Machine-outil de ponçage selon la revendication 6 ou 7, **caractérisée par le fait que** le rotor (24) du moteur d'entraînement (7) de la broche de travail (5) est relié rigidement à la partie intérieure (16) de ladite broche de travail (5).

9. Machine-outil de ponçage selon l'une des revendications précédentes, **caractérisée par le fait que** la broche de travail (5) est pourvue d'un dispositif d'équilibrage automatique (22).

10. Machine-outil de ponçage selon l'une des revendications précédentes, **caractérisée par le fait que** ladite machine-outil de ponçage (1) est munie d'un guide (13) conférant une mobilité relative à la broche (4) porte-pièces et à la broche de travail (5).
